# EUROPEAN PATENT SPECIFICATION

(11) **EP 0 565 338 B1**
(45) Date of publication and mention of the grant of the patent: **16.06.1999**
(21) Application number: 93302687.4
(22) Date of filing: 06.04.1993
(51) Int. Cl.: G11B 19/20, G11B 33/08, G11B 7/085

(54) **Disk system**
Plattensystem
Système de disques

(30) Priority: 06.04.1992 KR 9205672
(43) Date of publication of application: 13.10.1993
(73) Proprietor: SAMSUNG ELECTRONICS CO., LTD., Suwon-city, Kyungki-do 441-373 (KR)
(72) Inventor: Min, Kyoung-Seo, Kwonsun-gu, Suwon-city, Kyungki-do (KR)
(74) Representative: Stanley, David William

(56) References cited:
- EP-A- 0 307 202
- EP-A- 0 387 224
- EP-A- 0 457 194
- WO-A-87/03731
- WO-A-91/02352
- US-A- 4 942 567
- PATENT ABSTRACTS OF JAPAN vol. 9, no. 190 (P-378) 7 August 1985 & JP-A-60 059 543 (SONY KK) 5 April 1985

## Description

The present invention relates to disk drives, and may find application in early brake driving methods and circuits for a disk system such as, for example, an Optical Disk Driver, Compact Disk Player, CD-ROM, CD-XA, CD-I and the like.

Generally, because a large amount of digital information is stored on a disk of a disk system, a fast pickup drive with swift tracking should be realized.

However, when the pickup is moved and stopped, as in track seeking, the pickup may have a drawback in that it slips due to inertia, or a lens on the pickup may vibrate, thereby to prevent swift tracking.

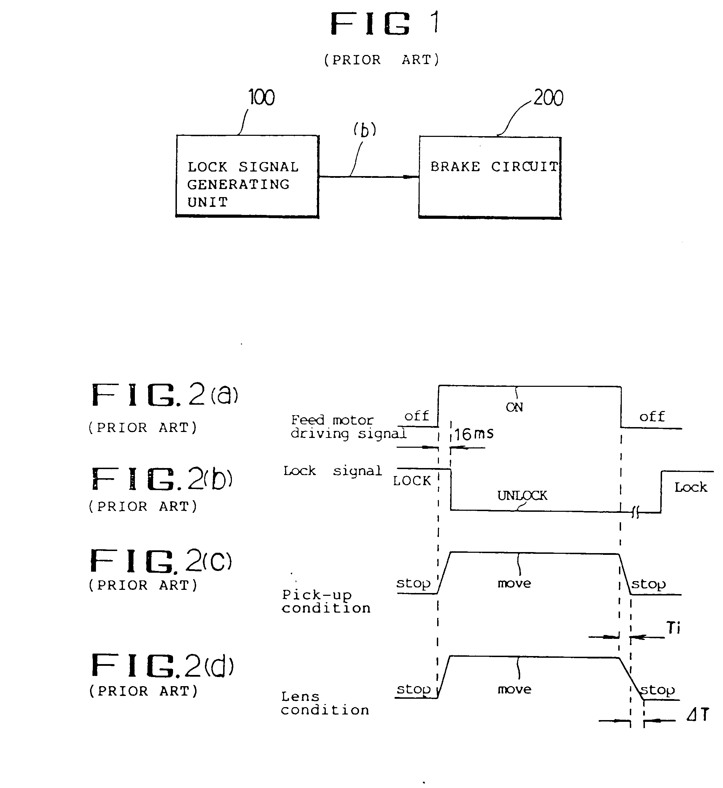

Figure 1 of the accompanying diagrammatic drawings is a drawing of a conventional brake driving circuit having such a drawback.

In Figure 1, a lock signal generating unit 100 outputs lock signals when a Constant Linear Velocity CLV is realized, and when the CLV is not realized, outputs unlock signals.

A brake circuit 200 is carried into a brake mode thereby to perform tracking when the lock signals are output from the lock signal generating unit 100, and when unlock signals are output, the brake circuit does not perform tracking due to a release of the brake mode.

In other words, during normal reproduction, because the CLV is realized, the brake circuit is changed into a brake mode for performance of the tracking. However, when the pickup is moved in radiant directions, as in a track seek, the CLV is not realized, thereby to release the brake mode, so that tracking is not performed.

Figures 2a-2d of the accompanying diagrammatic drawings are timing drawings for explaining operational states of Figure 1.

First of all, when a feed motor driving signal is output ON in order to move the pickup radially of the disk as in Figure 2a during a track seek, the lock signal generating unit 100 changes the lock signals to unlock signals, thereby to output the same after a predetermined time (around 16ms) has passed, as shown in FIG 2b, because the CLV has not been realized.

Henceforth, even if the feed motor driving signal (see Figure 2a) is rendered off, the lock signal generating unit 100 keeps outputting unlock signals as illustrated in Figure 2b, and outputs lock signals when the CLV is realized.

Meanwhile, when the feed motor driving signals are output ON as illustrated in Figure 2a, the pickup and lens move as illustrated in Figure 2d, and when the feed motor driving signals are turned off, the pickup and the lens are stopped.

However, the lens vibrates due to inertia for a predetermined period of time (ΔT) even after the pickup is stopped within a shortest possible period of time T1, causing the tracking not to be realized.

In other words, because the brake circuit 200 comes to an unlock state, which implies that the same is under a release of the brake mode, the tracking is not realized, resulting in a problem that the tracking is not realized quickly during the track seek.

For example, in U.S. Patent No. 4,942,567 entitled, "Disk Reproducing Methods", a method is presented to reduce a track flow appearing due to a track jump or an external shock.

The method of U.S. Patent No. 4,942,567 conducts conventional reproducing operations, and when an external shock is received, and when a first servo circuit is released from a lock state for a predetermined period of time, a second and a third servo circuit are rendered off thereby to reduce the track flow which can happen during a reproducing operation of the pickup.

Furthermore, a tracking actuator is always locked in the vicinity of a neutral point, resulting in a reduction of an amount of correction of the slider.

Even in the braking mode the tracking servo circuit can quickly be locked.

However, because the method of the aforesaid U.S. Patent can not prevent the vibration of the lens from occurring during track seeking when the pickup is stopped, the problem still exists that fast tracking can not be realized.

In other words, when the pickup stops at a given place during the seek, the lens vibrates due to the inertial causing a problem that a desired track can not be accessed at high speed.

In order to solve the aforementioned problems, preferred embodiments of the present invention aim to provide an early brake driving method and circuit for a disk system which enable tracking to be realized early during a seek thereby to make high speed access possible.

According to one aspect of the present invention, there is provided a drive method for a disk system, the disk system having a pickup arranged to move radially with respect to a disk by means of a feed motor, said method comprising the steps of:
(a) generating an input signal coupled to operate a brake circuit of the feed motor in a lock state when a Constant Linear Velocity of the feed motor is realised, and to operate said brake circuit in an unlock state when the constant Linear Velocity is not realized;
characterized by the step of:
(b) when an operation is selected which involves stoppage of the feed motor of the system following radial movement of the pickup with respect to a disk, generating a brake driving signal to forcibly engage the brake mode of the brake circuit, said brake driving signal being generated upon removal of a drive signal to the feed motor, such that vibration of a lens of the pickup is damped during stoppage.

Preferably, the time that the unlock state is forcibly changed to the lock state covers a period from when the feed motor is stopped to when the feed motor comes to a Constant Linear Velocity (CLV) and returns back to the lock state.

Preferably, the lock signal and unlock signal are output from a lock signal generating unit.

Preferably, the brake mode represents an operational state of a tracking circuit.

According to another aspect of the present invention, there is provided a drive circuit for a disk system, which system includes a pickup arranged to move radially with respect to a disk by means of a feed motor, the circuit comprising:
a lock signal generating unit which outputs a lock signal for a brake circuit of the system to thereby engage a brake mode during realisation of CLV of the feed motor and outputs an unlock signal for the brake circuit to thereby disengage the brake mode when CLV is not realised;
characterised in that the circuit further comprises:
a microcomputer which, upon removal of a drive signal to the feed motor, outputs a brake driving signal, to thereby engage the brake mode of the braking circuit, the brake driving signal being output until the lock signal from the lock signal generating unit is discriminated, such that vibration of a lens of the pickup is damped during stoppage of the pickup; and
a logic means coupled to said lock signal generating unit and said microcomputer for driving said brake circuit to engage or disengage said brake mode in accordance with said lock/unlock signal and said brake driving signal.

Preferably, the brake mode represents an operational state of a tracking circuit.

Preferably, the logic means comprises an OR gate which drives the brake circuit in the brake mode when at least one of the lock signal output from the lock signal generating unit and the brake driving signal output from the microcomputer is turned on.

The invention extends to a disk system provided with a drive circuit, or adapted to perform a drive method, according to any of the preceding aspects of the invention.

For a better understanding of the invention, and to show how the same may be carried into effect, reference will now be made, by way of example, to Figures 3 to 8 of the accompanying diagrammatic drawings, in which:
Figure 3 is a block schematic drawing of one example of a brake driving circuit in accordance with the present invention;
Figures 4a-4f are timing drawings for illustrating operational states in the circuit of Figure 3;
Figure 5 is a flow chart illustrating one example of a brake driving method in accordance with the present invention;
Figure 6 is a block diagram showing a tracking control device effecting a brake mode along with the circuit of Figure 3; and
Figures 7a-7h and Figures 8a-8h are timing drawings for illustrating operational states of the device of Figure 6.

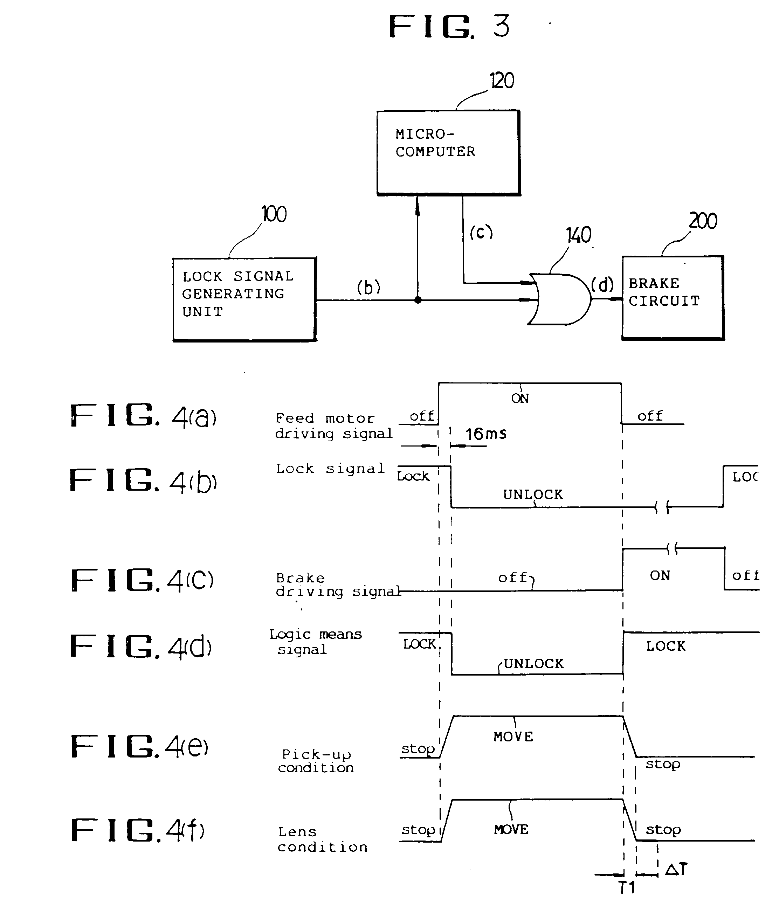

Figure 3 shows an early brake driving circuit for a disk system, which comprises:
a lock signal generating unit 100 which outputs lock signals during a realization of CLV and outputs unlock signals when CLV is not realized;
a microcomputer 120 which outputs brake driving signals for stopping a feed motor for moving a pickup along a disk in a radial direction, in accordance with a lock state discriminated by a signal output from the lock signal generating unit 100; and
a logic means 140 which comprises an OR gate and forcibly changes the feed motor from an unlock state to a lock state by way of brake driving signals output from the microcomputer 120, so that a brake circuit 200 can be operated in a brake mode thereby to control vibration of a lens.

In other words, the logic means 140 outputs unlock signals only when the feed motor driving signals are output, and outputs lock signals during stoppage of the pickup, so that the brake circuit 200 can be operated in the brake mode thereby to control the vibration of the lens and thereafter to realize a fast tracking.

The brake circuit 200-is changed into the brake mode during a stoppage of the pickup by lock signals output from the logic means 140 thereby to perform the tracking.

Figures 4a-4f are timing drawings for illustrating operational states in Figure 3.

First of all, when the feed motor driving signals are output ON in order to move the pickup radially of the disk during a track seek as illustrated in Figure 4a, the lock signal generating unit 100 changes lock signals to unlock signals after a lapse of a predetermined period of time (around 16ms) as illustrated in Figure 4b because CLV has not been realized.

Henceforth, even if the feed motor driving signals (refer to Figure 4a) are rendered off, the look signal generating unit 100, as illustrated in Figure 4b, keeps outputting unlock signals and, when CLV is realized, outputs lock signals.

The microcomputer 120 outputs ON brake driving signals as illustrated in Figure 4c when the feed motor driving signals, as illustrated in Figure 4a, are rendered off.

Then, the microcomputer 120 cuts off the output of the feed motor driving signals when the CLV is realized thereby to cause the lock signal generating unit 100 to output lock signals.

The logic means 140 performs a logic sum on the output signal of the lock signal generating unit 100 as illustrated in Figure 4b and the output of the microcomputer 120 as illustrated in Figure 4c thereby to output a signal as illustrated in Figure 4d.

In other words, the unlock state is maintained until the feed motor driving signal is rendered off.

Accordingly, the brake circuit 200 maintains the lock state during the stoppage of the pickup as illustrated in Figure 4d.

Meanwhile, when the feed motor driving signal is output ON as illustrated in Figure 4a, the pickup and lens are moved as illustrated in Figures 4e and 4f, and when the feed motor driving signal is turned off, the pickup and lens stop moving.

At this moment, the brake circuit 200, as mentioned above, maintains the lock state thereby to be operated under the brake mode, so that the vibration of the lens is prevented.

Accordingly, the pickup and lens are stopped within a very short period of time T1 when the feed motor driving signal is rendered off, so that the tracking can be conducted quickly, and especially during a predetermined period of time ΔT.

An example of an early brake driving method for a disk system in accordance with the present invention comprises the steps of transitting forcing a change of an unlock state to a lock state during a stoppage of a feed motor which moves a pickup of the disk in radial directions (first step) and controls vibration of a lens during the stoppage of the pickup by operating the feed motor in a brake mode when the same is changed to the lock state in the above first step (second step).

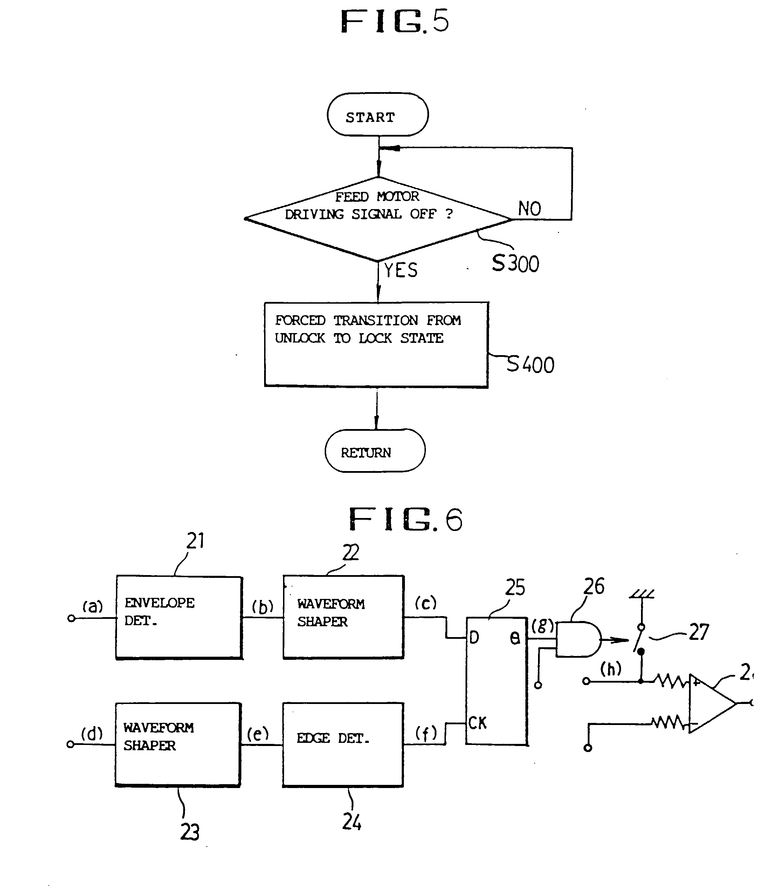

In the flow chart of Figure 5, a discrimination is made in step S300 as to whether the feed motor driving signal for moving the pickup of the disk in radial directions is rendered off.

If the discrimination result at the step S300 shows that the feed motor driving signal is rendered off, the flow advances to step S400.

The unlock state is forcibly changed to the lock state at step S400.

In other words, when the pickup is moved by the feed motor driving signal, as in the case of a track seek, CLV is not realized, and the lock signal generating unit outputs the unlock signal to the brake circuit thereby to release the brake mode, so that tracking is not performed.

Then the feed motor driving signal is rendered off, and when the pickup is stopped, the microcomputer forcibly transits unlock signals output from the lock signal generating unit to lock signals, so that the brake circuit is made to operate in the brake mode.

Accordingly, the vibration of the lens generating during the stoppage of the pickup is controlled, so that a fast tracking can be conducted.

Figure 6 is a block diagram for showing a tracking control device effecting a brake mode along with the circuit of Figure 3.

Reference numeral 21 at Figure 6 is an envelope detecting circuit for detecting an envelope when a reproduced radio frequency RF signal is input.

An output detected from the envelope detecting circuit is supplied to a waveform shaper 22 which performs waveform shaping.

Reference numeral 23 is a waveform shaper which performs a waveform shaping on an incoming tracking error signal to thereafter output the same as a pulse signal.

A pulse signal edge waveform-shaped from the waveform shaper 23 is detected at an edge detecting circuit 24.

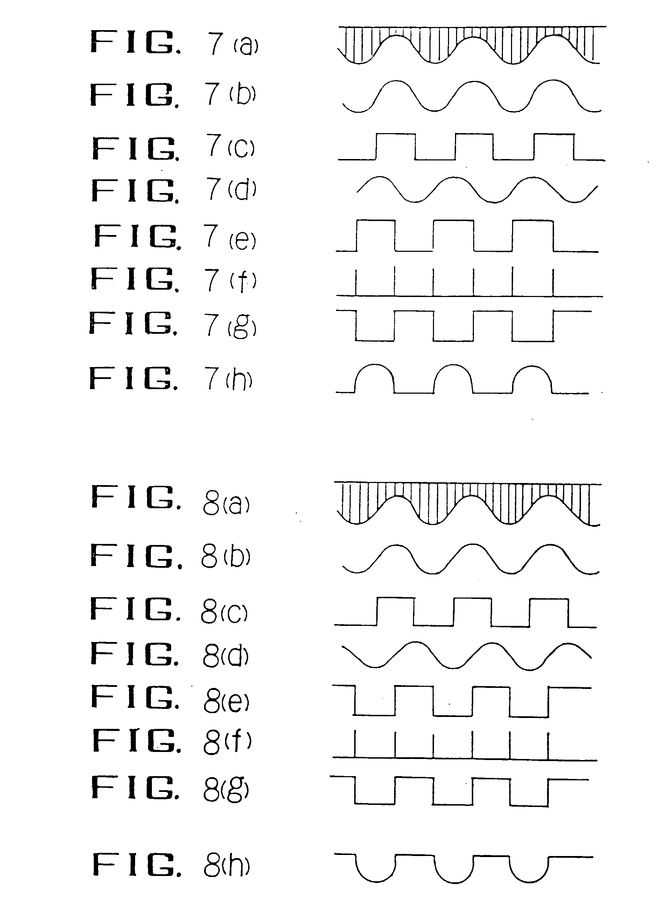

Meanwhile, when a light spot crosses the tracks of a disk from an exterior of the disk to an interior of the same, the RF signal envelope is detected from a waveform in Figure 7a to a waveform in Figure 7b and is converted to a pulse signal just like a waveform illustrated in Figure 7c.

A tracking error signal as illustrated in Figure 7d is converted to a pulse signal as illustrated in Figure 7e.

The edges of the above waveform are detected as illustrated in Figure 7f.

In another example, when the light spot crosses from the interior of the disk to the exterior of the same, the waveform shapes of the signals are as per Figure 8 (These signals are determined by the same reference characteristics as in Figure 7)

The only difference is that Figure 8 shows the light spot crosses the tracks from the interior of the disk to the exterior, and in this case, a phase relationship is different between the RF signal and the tracking error signal when the light spot crosses the tracks from the exterior of the disk to the interior.

In case the light spot crosses the tracks from the exterior to the interior, the RF signal is rendered at a low level according to a timing determined by a rising edge of the tracking error signal, and the RF signal is increased to a high level at a declining edge of the tracking error signal.

The RF signal is changed to a reverse level of the above case when the light spot crosses the tracks from the interior of the disk to the exterior.

In other words, the output from the waveform shaper 22 is latched to a delay flip-flop 25 in response to an output of the edge detecting circuit corresponding to a clock signal thereby to output waveforms as illustrated in Figure 7g and Figure 8g to an output terminal of the delay flip-flop 25.

The output Q is supplied to a switch 27 through an AND gate 26 thereby to render the switch 27 on or off.

The switch 27 is rendered on when the output of the AND gate 26 is at high levels, and when in low levels, is rendered off.

When the switch 27 is turned off, the input terminal of an amplifying circuit 28 for amplifying the tracking error signal is grounded.

In other words, only when the switch 27 is turned Off, the tracking error signal is amplified thereby to be output (the same waveforms as illustrated in Figure 7h or Figure 8h)

In other words, only the power for driving the light spot in a reverse direction of the moving direction (namely, the braking power) is reproduced.

Under the brake mode, a signal of high level is input to the other end of an input terminal of the AND gate 26 and the aforementioned operations are conducted.

Namely, during a disk play, a signal of low level is supplied to one end of an input terminal of the AND gate 26 thereby to release the brake mode, so that the switch 27 maintains an off state.

As seen from the foregoing, the illustrated examples of an early brake driving method and circuit for a disk system operate the brake circuit in a brake mode even during the stoppage of the pickup, so that a fast tracking can be obtained and an effect of a high speed access can be made possible.

It should be apparent that the present invention can be applied to all kinds of fields intended to conduct an early tracking.

## Claims

1. A drive method for a disk system, the disk system having a pickup arranged to move radially with respect to a disk by means of a feed motor, said method comprising the steps of:
(a) generating an input signal (Fig.4b) coupled to operate a brake circuit of the feed motor in a lock state when a Constant Linear Velocity of the feed motor is realised, and to operate said brake circuit in an unlock state when the constant Linear Velocity is not realized,
characterised in that the drive method further comprises the following step:
(b) when an operation is selected which involves stoppage of the feed motor of the system following radial movement of the pickup with respect to a disk, generating a brake driving signal (Fig.4c) to forcibly engage the brake mode of the brake circuit (200), said brake driving signal being generated upon removal of a drive signal (Fig.4a) to the feed motor, such that vibration of a lens of the pickup is damped during stoppage.

2. A method according to claim 1, wherein the time that the unlock state is forcibly changed to the lock state covers a period from when the feed motor is stopped to when the feed motor comes to a Constant Linear Velocity (CLV) and returns back to the lock state.

3. A method according to claim 1 or 2, wherein the lock signal and unlock signal are output from a lock signal generating unit (100).

4. A method according to any of the preceding claims, wherein the brake mode represents an operational state of a tracking circuit.

5. A drive circuit for a disk system, which system includes a pickup arranged to move radially with respect to a disk by means of a feed motor, the circuit comprising:
a lock signal generating unit (100) which outputs a lock signals (Fig.4b) for a brake circuit (200) of the system to thereby engage a brake mode during realisation of CLV of the feed motor and outputs an unlock signal for the brake circuit (200) to thereby disengage the brake mode when CLV is not realised;
characterised in that the circuit further comprises:
a microcomputer (120) which, upon removal of a drive signal (Fig.4a) to the feed motor, outputs a brake driving signal (Fig.4c), to thereby engage the brake mode of the braking circuit (200), the brake driving signal being output until the lock signal (Fig.4b) from the lock signal generating unit (100) is discriminated, such that vibration of a lens of the pickup is damped during stoppage of the pickup;
a logic means (140) coupled to said lock signal generating unit (100) and said microcomputer (120) for driving said brake circuit to engage or disengage said brake mode in accordance with said lock/unlock signal and said brake driving signal.

6. A drive circuit according to claim 5, wherein the brake mode represents an operational state of a tracking circuit.

7. A drive circuit according to claim 5 or 6, wherein the logic means (140) comprises an OR gate which drives the brake circuit (200) in the brake mode when at least one of the lock signal (4b) output from the lock signal generating unit (100) and the brake driving signal (4c) output from the microcomputer (120) is turned on.

8. A disk system provided with a drive circuit according to any of the preceding claims.

## Patentansprüche

1. Antriebsverfahren für ein Plattensystem, das einen Abnehmer umfaßt, der mit Hilfe eines Antriebsmotors radial über eine Platte bewegt werden kann, wobei das Verfahren folgenden Schritt umfaßt:
(a) Erzeugen eines Eingabesignals (Fig. 4b) zum Betreiben einer Bremsschaltung des Antriebsmotors in einem Sperrzustand, wenn eine konstante lineare Geschwindigkeit des Antriebsmotors realisiert wird, und zum Betreiben der Bremsschaltung in einem Freigabezustand, wenn die konstante lineare Geschwindigkeit nicht realisiert wird,
dadurch gekennzeichnet, daß das Antriebsverfahren weiterhin den folgenden Schritt umfaßt:
(b) Erzeugen eines Bremssteuersignals (Fig. 4c), um den Bremsmodus der Bremsschaltung (200) zu erzwingen, wenn ein Betrieb ausgewählt ist, der das Stoppen des Antriebsmotors des Systems nach der radialen Bewegung des Abnehmers über die Platte umfaßt, wobei das Bremssteuersignal nach dem Ausschalten eines Antriebssignals (Fig. 4a) an den Antriebsmotor erzeugt wird, so daß die Vibration einer Linse des Abnehmers während des Stoppens gedämpft wird.

2. Verfahren nach Anspruch 1, wobei die Zeitdauer, für die der Wechsel des Freigabezustandes in den Sperrzustand erzwungen wird, vom Stoppen des Antriebsmotors bis zu dem Zeitpunkt andauert, bei dem der Antriebsmotor die konstante lineare Geschwindigkeit (CLV) erreicht und in den Sperrzustand zurückkehrt.

3. Verfahren nach Anspruch 1 oder 2, wobei das Sperrsignal und das Freigabesignal von einer Sperrsignal-Erzeugungseinheit (100) ausgegeben werden.

4. Verfahren nach wenigstens einem der vorstehenden Ansprüche, wobei der Bremsmodus einen Betriebszustand einer Spureinstellungsschaltung darstellt.

5. Antriebsschaltung für ein Plattensystem, das einen Abnehmer umfaßt, der mit Hilfe eines Antriebsmotors radial über eine Platte bewegt werden kann, mit:
einer Sperrsignal-Erzeugungseinheit (100), die ein Sperrsignal (Fig.4b) für eine Bremsschaltung (200) des Systems ausgibt, um einen Bremsmodus während der Realisation der CLV des Antriebsmotors zu aktivieren, und die ein Freigabesignal für die Bremsschaltung (200) ausgibt, um den Bremsmodus aufzuheben, wenn die CLV nicht realisiert wird,
dadurch gekennzeichnet, daß die Schaltung weiterhin umfaßt:
einen Mikrocomputer (120), der nach dem Entfernen eines Antriebssignals (Fig. 4a) für den Antriebsmotor ein Bremssteuersignal ausgibt, um den Bremsmodus der Bremsschaltung (200) zu aktivieren, wobei das Bremssteuersignal ausgegeben wird, bis das Sperrsignal (Fig. 4b) aus der Sperrsignal-Erzeugungseinheit (100) festgestellt wird, so daß die Vibration einer Linse des Abnehmers während des Stoppens des Abnehmers gedämpft wird, und
eine mit der Sperrsignal-Erzeugungseinheit (100) und dem Mikrocomputer (120) verbundene Logikeinrichtung (140), um die Bremsschaltung zu betreiben, damit diese den Bremsmodus in Übereinstimmung mit dem Sperrsignal/Freigabesignal und mit dem Bremssteuersignal aktiviert oder aufhebt.

6. Antriebsschaltung nach Anspruch 5, wobei der Bremsmodus einen Betriebszustand einer Spureinstellungsschaltung darstellt.

7. Antriebsschaltung nach Anspruch 5 oder 6, wobei die Logikeinrichtung (140) ein ODER-Gatter umfaßt, das die Bremsschaltung (200) im Bremsmodus betreibt, wenn das aus der Sperrsignal-Erzeugungseinheit (100) ausgegebene Sperrsignal (4b) und/oder das aus dem Mikrocomputer (120) ausgegebene Bremssteuersignal (4c) angeschaltet sind.

8. Plattensystem mit einer Antriebsschaltung in Übereinstimmung mit wenigstens einem der vorstehenden Ansprüche.

## Revendications

1. Procédé de commande d'un système à disque, le système à disque ayant une tête de lecture faite pour être déplacée radialement par rapport à un disque au moyen d'un moteur d'entraînement, ce procédé comprenant les opérations de :
(a) production d'un signal d'entrée (fig. 4b) appliqué pour faire fonctionner un circuit de freinage du moteur d'entraînement dans un état bloqué lorsqu'une vitesse linéaire constante du moteur d'entraînement est atteinte et faire fonctionner ce circuit de freinage dans un état débloqué lorsque la vitesse linéaire constante n'est pas atteinte,
caractérisé par le fait que ce procédé de commande comprend l'opération suivante :
(b) lorsqu'est choisi un fonctionnement qui implique l'arrêt du moteur d'entraînement du système après mouvement radial de la tête de lecture par rapport à un disque, il est produit un signal de commande de freinage (fig. 4c) pour établir de force le mode de freinage du circuit de freinage (200), ce signal de commande de freinage étant produit à l'enlèvement d'un signal de commande (fig. 4a) au moteur d'entraînement, de sorte que la vibration d'une lentille de la tête de lecture est amortie lorsqu'elle s'arrête.

2. Procédé selon la revendication 1, dans lequel le temps prendant lequel l'état débloqué est changé de force en l'état bloqué couvre une période allant de l'instant auquel le moteur d'entraînement est arrêté à l'instant auquel celui-ci atteint une vitesse linéaire constante (CLV) et revient à l'état bloqué.

3. Procédé selon l'une des revendications 1 et 2, dans lequel le signal de blocage et le signal de déblocage sont émis par un organe de production de signaux de blocage (100).

4. Procédé selon l'une des revendications précédentes, dans lequel le mode freinage représente un état fonctionnel d'un circuit de suivi de piste.

5. Circuit de commande d'un système à disque qui comporte une tête lecture faite pour être déplacée radialement par rapport à un disque au moyen d'un moteur d'entraînement, ce circuit comprenant :
un organe de production de signaux de blocage (100) qui émet un signal de blocage (fig. 4b) pour un circuit de freinage (200) du système afin d'établir un mode freinage lorsqu'une vitesse linéaire constante (CLV) du moteur d'entraînement est atteinte et émet un signal de déblocage pour le circuit de freinage (200) afin de supprimer le mode blocage lorsque la CLV n'est pas atteinte,
caractérisé par le fait que le circuit comprend en outre:
un microcalculateur (120) qui, à l'enlèvement d'un signal de commande (fig. 4 a) au moteur d'entraînement, émet un signal de commande de freinage (fig. 4c) afin d'établir le mode freinage du circuit de freinage (200), ce signal de commande de freinage étant émis jusqu'à ce que le signal de blocage (fig. 4b) émis par l'organe de production de signaux de blocage (100) soit discriminé, de sorte que la vibration d'une lentille de la tête de lecture est amortie lorsque la tête de lecture s'arrête,
un moyen logique (140) associé à l'organe de production de signaux de blocage (100) et au microcalculateur (120) pour actionner le circuit de freinage pour établir ou supprimer le mode freinage selon le signal blocage/freinage et le signal de commande de freinage.

6. Circuit de commande selon la revendication 5, dans lequel le mode freinage représente un état fonctionnel d'un circuit de suivi de piste.

7. Circuit de commande selon l'une des revendications 5 et 6, dans lequel le moyen logique (140) comprend une porte OU qui actionne le circuit de freinage (200) en mode freinage lorsqu'au moins l'un du signal de blocage (fig. 4b) émis par l'organe de production de signaux de blocage (100) et du signal de commande de freinage (fig. 4c) émis par le microcalculateur (120) est rendu actif.

8. Système à disque pourvu d'un circuit de commande selon l'une des revendications précédentes.
